# EUROPÄISCHE PATENTSCHRIFT

(11) **EP 0 842 104 B1**
(45) Veröffentlichungstag und Bekanntmachung des Hinweises auf die Patenterteilung: **23.12.1998**
(21) Anmeldenummer: 96925705.4
(22) Anmeldetag: 10.07.1996
(51) Int. Cl.: B65G 17/42

(54) **ZWEITEILIGER STOLLEN**
TWO-PART CLEATS
TASSEAU EN DEUX PARTIES

(30) Priorität: 01.08.1995 DE 19528205
(43) Veröffentlichungstag der Anmeldung: 20.05.1998
(73) Patentinhaber: Svedala Industri (Deutschland) GmbH, 22047 Hamburg (DE)
(72) Erfinder: NOLTE, Günter, D-47447 Moers (DE)
(74) Vertreter: Rupprecht, Kay, Dipl.-Ing.
(86) Internationale Anmeldenummer: EP9603019
(87) Internationale Veröffentlichungsnummer: WO9705046

(56) Entgegenhaltungen:
- DE-A- 4 223 634
- DE-C- 971 983
- US-A- 3 537 571

## Beschreibung

Die Erfindung betrifft einen Stollen für einen Fördergurt aus elastomerem Material, insbesondere für einen Senkrechtförderer, mit einem auf der Tragseite des Fördergurts befestigbaren Stollenfuß, in dem sich ein Verankerungselement befindet, und mit einem eine Querwand des Fördergurts bildenden Stollenabschnitt, der mit Hilfe des Verankerungselements lösbar am Stollenfuß befestigt ist.

Derartige Fördergurte sind aus dem Bergbau bekannt. Sie werden mit einer Steigung von etwa 70° als Steilförderer oder aber - als Senkrechtförderer - mit noch größerer Steigung eingesetzt. Die Stollenabschnitte eines solchen Fördergurts, welche die Querwände der Taschen zur Aufnahme des Schüttgurts bilden, verlaufen im allgemeinen zunächst über zwei Drittel ihrer Höhe rechtwinklig zur Gurtoberfläche und knicken danach unter einem Winkel von ca. 45° ab. Jedoch erlaubt der gerade Teil des Stollens keinen Materialabwurf direkt von der oberen Umlenktrommel des Fördergurts, da beim Entlade-Überlauf der oberen Umlenktrommel Schüttgut auf dem geraden Teil des vorauslaufenden Stollens liegen bleibt und damit wieder nach unten gebracht wird. Diesem Problem begegnet man im allgemeinen dadurch, daß der Fördergurt unterhalb der Umlenktrommel (Kopfstation) mittels einer Ablenktrommel abgelenkt wird, so daß eine vollständige Entleerung des Schüttgutes erfolgen kann.

Allerdings werden die Anforderungen, die an Fördergurte im Bergbau gestellt werden, immer höher, da immer tiefer gefördert werden muß. Das bedingt immer größere Längen des Fördergurts, wodurch sich das - im Vergleich zum Schüttgut allein maßgebliche - Eigengewicht des Fördergurts erhöht. Durch die Ablenkung des Fördergurts werden wiederum dessen freie Randzonen mit dem vollen Gewicht des hängenden Rücktrums des Fördergurts belastet, so daß sehr hohe spezifische Gurtfestigkeiten erforderlich werden, die ihrerseits wegen des Eigengewichts des Fördergurts die erreichbare Förderhöhe begrenzen.

Um dieser gesamten Problematik zu begegnen, ist man bestrebt, sogenannte "Schrägstollen" zu verwenden, die unter einem konstanten Winkel von etwa 45° zur Gurtoberfläche geneigt sind. Mit solchen Schrägstollen beginnt der Abwurf des Schüttguts unmittelbar nach Verlassen des oberen Totpunktes und erfolgt im wesentlichen frei ohne Berührung des vorlaufenden Stollens. Allerdings besteht die Problemstellung bei einem solchen Schrägstollen darin, ihn mit sicherem Halt auf der Gurtoberfläche zu befestigen. An dieser Problemstellung setzt die vorliegende Erfindung an.

Aus der Druckschrift DE 971 983 ist ein zweiteiliger Stollen für einen Senkrechtförderer bekannt, der einen einstückig mit dem Fördergurt (2) ausgebildeten Stollenfuß (6) und einen eine Querwand des Fördergurts bildenden Stollenabschnitt (3) aus Blech aufweist. Letzterer wird mittels eines Gegenblechs (8) und einer Schraubenverbindung (9) am Stollenfuß (6) befestigt.

Die Druckschrift US-A-3,537,571 offenbart einen zahnriemenartigen Kettenförderer (1) mit Trägerstangen (7, 8), die sich der zur Laufrichtung des Fördergurtes in den Zahnblöcken (3, 4) des Fördergurtes erstrecken und seitlich über den Fördergurt hinausstehen, wo sie durch splintartige Seitenelemente (9, 9') miteinander verbunden sind, welche über die Tragseite des Fördergurtes hinaus verlängert sind, und mit einer weiteren Trägerstange (12) zwischen den beiden verlängerten Enden der splintartigen Seitenelemente (9, 9'), auf der mittels eines Hakens (13) ein becher- oder wannenartiges Förderelement befestigt werden kann. In der Figur 3 dieser Druckschrift wird die Möglichkeit offenbart, daß die beiden Trägerstangen (15, 16) auch mit Gewindebohrungen (19) versehen sein können, in die Bolzen (17) geschraubt werden, an deren oberen Enden (18) ein Förderelement befestigt werden soll.

Allerdings betrifft die US-A-3,537,571 nicht wirklich einen Fördergurt, sondern einen Kettenförderer, wie er beispielsweise in der Druckschrift US-A-4,177,891 beschrieben ist. Die dortigen Becher oder Wannen (3) sind solche, wie sie an den Bolzen (13) des Kettenförderers der US-A-3,537,571 befestigt werden sollen.

Aus den Druckschriften DE 91 05 048 U, DE 38 35 619 C2 und DE 42 40 201 C1 sind zweiteilige Stollen für Fördergurte der eingangs genannten Art bekannt. Die Stollenfüße dieser bekannten Stollen weisen eine im Querschnitt rechteckige Nut auf, in welche ein Stollenabschnitt, der eine Querwand des Fördergurts bildet, eingesetzt ist und welcher über einen Anlageflansch verfügt. Die Befestigung des Stollenabschnitts an bzw. auf dem Stollenfuß erfolgt über U-förmige Verankerungselemente, die in den Stollenfuß eingelassen sind und die an ihren Enden mit einem Gewinde versehen sind. Beim Einsetzen des Stollenabschnitts in den Stollenfuß werden die Enden des U-förmigen Verankerungselements durch entsprechende Löcher in dem Anlageflansch des Stollenabschnitts geführt, und anschließend werden Muttern auf die Gewindeenden geschraubt, so daß der Stollenabschnitt einen festen Sitz auf dem Stollenfuß erhält. Der Stollenfuß seinerseits ist auf die Gurtoberfläche aufvulkanisiert.

Aufgabe der vorliegenden Erfindung ist es, eine einfachere Art der Befestigung des Stollenabschnitts am Stollenfuß zu ermöglichen. Dabei geht die Erfindung von einem zweiteiligen Stollen aus, wie er aus der DE 42 40 201 C1 bekannt ist.

Diese Aufgabe wird durch einen Stollen mit den Merkmalen des Patentanspruchs 1 gelöst.

Die Verankerungsstange wird bei der Herstellung des Stollenfußes mit Haftmittel eingestrichen, mit den Schrauben zur Befestigung des Stollenabschnitts bestückt und dann einstückig in den Stollenfuß einvulkanisiert. Nach der Fertigstellung des Stollenfußes können die Schrauben herausgenommen werden; die Lage der Verankerungsstange in den Stollenfuß ist dann fixiert. Alternativ hierzu wäre es durchaus auch möglich, die Verankerungsstange in den gleichen Abständen, wie die Gewindebohrungen in der Stange vorgesehen sind, mit radial abstehenden Bolzen zu versehen, auf die dann der Stollenabschnitt aufgesteckt und verschraubt wird.

Der erfindungsgemäß zweiteilige Stollen weist eine ganze Reihe erheblicher Vorteile auf. Zum einen sind die Stollenabschnitte, welche die Querwände des Fördergurts bilden, einfach und schnell an den Stollenfüßen montierbar, so daß der Fördergurt mit den aufvulkanisierten Stollenfüßen getrennt von den Stollenabschnitten, den eigentlichen Stollen, vom Hersteller zum Einsatzort transportiert werden können. Dadurch ist eine verhältnismäßig enge Verschachtelung des Fördergurts beim Transport möglich, wodurch Fördergurte mit einer Länge von 500 bis 600 Metern in einem Stück transportiert werden können. Darüber hinaus ermöglicht die einfache Montierbarkeit der Stollenabschnitte an den Stollenfüßen ein rasches Auswechseln eines beschädigten Stollenabschnitts, was insbesondere deshalb von Vorteil ist, da Stillstandzeiten des Fördergurts unerwünscht sind. Schließlich ist der Stollenabschnitt selbst durch seine einfache Befestigung am Stollenfuß einfach herstellbar, was die Kosten für die Herstellung senkt.

Vorteilhafte Weiterbildungen der Erfindung sind in den Unteransprüchen angegeben.

Vorzugsweise weist der Stollenfuß einen Schenkel auf, an dem der untere Bereich des Stollenabschnitts zur Befestigung am Stollenfuß flächig anliegt. Der Vorteil dieser Weiterbildung besteht ebenfalls in der einfachen Montierbarkeit des Stollenabschnitts an dem Stollenfuß und darin, daß auf dem Rücken des Stollenabschnitts keine wesentlichen Ecken und Nischen gebildet werden, in denen sich Fördergut ansammeln kann.

Die Formgebung des Stollenfußes stellt eine wesentliche Eigenschaft des erfindungsgemäßen Stollens dar, indem er vorzugs weise eine im wesentlichen dreieckförmige Querschnittsform aufweist. Dieser im Querschnitt dreieckförmige Stollenfuß wird mit seiner längsten Dreieckseite auf die Gurtoberfläche aufvulkanisiert und liefert somit eine hervorragende Querstabilität für den Fördergurt. Darüber hinaus weist der Stollenfuß selbst somit eine sehr stabile Form auf, die leicht herzustellen und wiederstandsfähig gegen Beschädigungen ist.

Im folgenden werden zwei bevorzugte Ausführungsbeispiele der Erfindung anhand einer Zeichnung näher erläutert.

Es zeigen:
- Fig. 1: eine schematische Seiten-Schnittansicht eines ersten Ausführungsbeispiels eines zweiteiligen Stollens;
- Fig. 2: eine schematische Seiten-Schnittansicht eines zweiten Ausführungsbeispiels eines zweiteiligen Stollens; und
- Fig. 3: eine schematische Seitenansicht der oberen Kopfstation des Fördergurts.

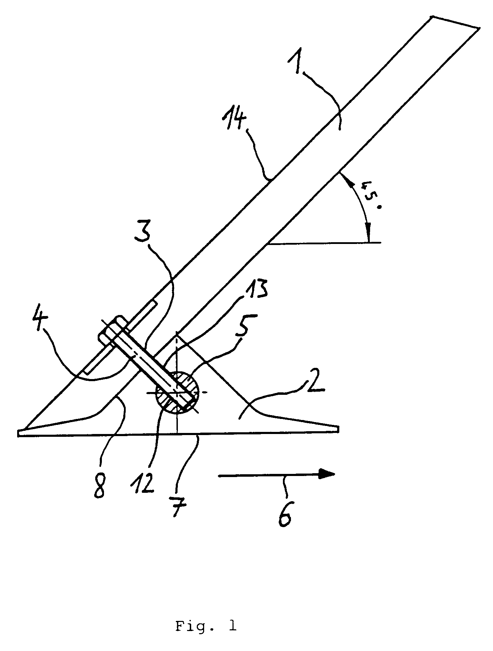

Fig. 1 zeigt einen zweiteiligen Stollen für einen Fördergurt, insbesondere für einen Senkrechtförderer. Auf der (nicht dargestellten) Tragseite des Fördergurts ist ein im Querschnitt dreieckförmiger Stollenfuß 2 mit seiner Unterseite 7 aufvulkanisiert. Bereits bei der Herstellung des Stollenfußes wurde ein Verankerungselement 5 in Form einer quer zur Laufrichtung 6 des Fördergurts durchgehenden Stange in den Stollenfuß einvulkanisiert.

Die Verankerungsstange 5 ist auch an den Stirnseiten vollständig von dem Material des Stollenfußes 2 umgeben und weist in frei wählbaren Abständen Gewindebohrungen 12 auf, welche mit entsprechenden Löchern 13 im Stollenfuß 2 fluchten.

An einem Schenkel 8 des Stollenfußes 2 liegt ein Stollenabschnitt 1 mit seinem unteren Bereich derart an, daß entsprechende Löcher 3 in dem Stollenabschnitt 1 mit den Löchern 13 im Stollenfuß 2 und den Gewindebohrungen 12 in der Verankerungsstange 5 fluchten, so daß zur Befestigung des Stollenabschnitts 1 an dem Stollenfuß 2 jeweils eine Schraube 4 durch die Löcher 3, 13 gesteckt und in die Gewindebohrung 12 fest eingedreht werden kann. Im montierten Zustand schmiegt sich der untere Bereich des Stollenabschnitts 1 an den Schenkel 8 des Stollenfußes 2 formschlüssig an, so daß keinerlei Nischen oder Kanten gebildet werden, die beim Entladen Schüttgut zurückhalten könnten. Bei dieser Konstruktion wird großer Wert auf eine weitestgehend unbeeinträchtigte, gerade Gleitfläche auf dem Rücken 14 des Stollens gelegt.

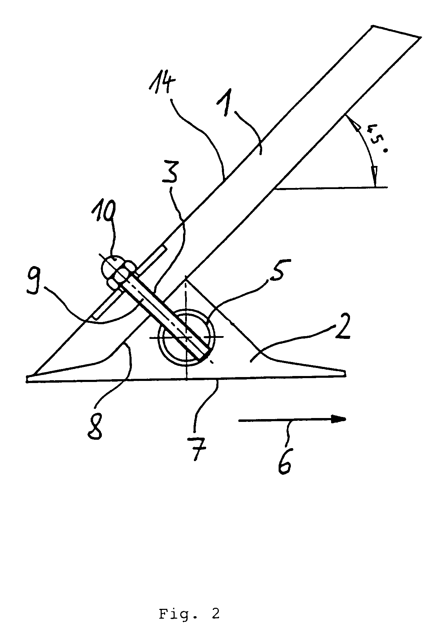

Fig. 2 zeigt ein anderes Ausführungsbeispiel eines zweiteiligen Stollens, bei dem das Verankerungselement 5 an Stelle der Gewindebohrungen 12 radial von der Verankerungsstange abstehende und senkrecht zum Schenkel 8 aus dem Stollenfuß herauslaufende Bolzen 9 aufweist, die beim Montieren des Stollenabschnitts 1 durch dessen Löcher 3 hindurchgesteckt und anschließend mit Muttern 10 gesichert werden.

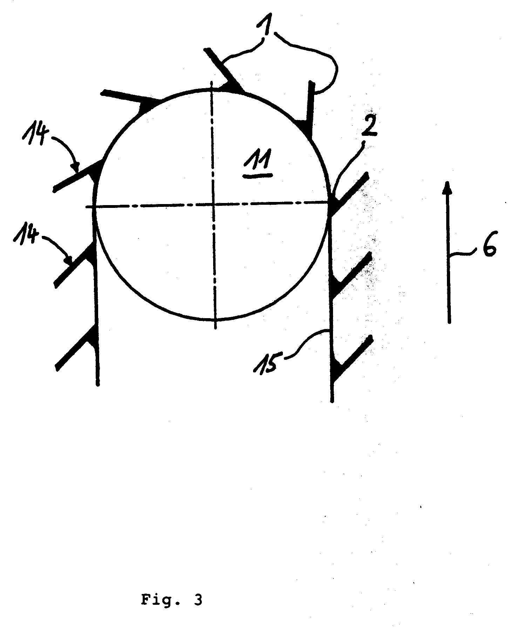

Figur 3 zeigt eine schematische Darstellung der Kopfstation des Fördergurts 15. In dieser Kopfstation läuft der Fördergurt 15 in Laufrichtung 6 um die obere Umlenktrommel 11 und entläd dabei das Schüttgut aus den zwischen den Stollenabschnitten 1 gebildeten Behältern. Bei genau mit dem Durchmesser der Umlenktrommel 11 abgestimmter Geschwindigkeit beginnt der Abwurf des Förderguts unmittelbar nach Verlassen des oberen Totpunktes und erfolgt im wesentlichen frei ohne Berührung des vorlaufendenn Stollenabschnitts 1. Sollte dennoch Schüttgut auf die Rücken 14 der vorlaufenden Stollen fallen, so sorgt deren durchgehende gerade Neigung für ein Abrutschen des Schüttguts in den Auffangbehälter.

## Patentansprüche

1. Stollen für einen Fördergurt aus elastomerem Material, insbesondere für einen Senkrechtförderer, mit einem auf der Tragseite des Fördergurts befestigbaren Stollenfuß (2), in dem sich ein Verankerungselement (5) befindet, und mit einem eine Querwand des Fördergurts bildenden Stollenabschnitt (1), der mit Hilfe des Verankerungselements (5) lösbar am Stollenfuß (2) befestigt ist,
**dadurch gekennzeichnet, daß**
das Verankerungselement (5) eine Stange ist, die sich quer zur Laufrichtung (6) des Fördergurts im Stollenfuß (2) erstreckt, daß der Stollenfuß (2) mit nur einem Schenkel (8) einseitig am Stollenabschnitt (1) anliegt, und daß ein Element (4, 9) einer Schraubenverbindung (9, 10; 4, 12) den Stollenabschnitt (1) im Querschnitt durchsetzt.

2. Stollen nach Anspruch 1,
**dadurch gekennzeichnet, daß**
der Stollenfuß (2) einen Schenkel (8) aufweist, an dem der untere Bereich des Stollenabschnitts (1) flächig anliegt.

3. Stollen nach Anspruch 1 oder 2,
**dadurch gekennzeichnet, daß**
der Stollenfuß (2) eine dreieckförmige Querschnittsform aufweist.

4. Fördergurt aus elastomerem Material, insbesondere Senkrechtförderer, mit Stollen gemäß einem oder mehreren der Ansprüche 1 bis 3.

## Claims

1. Cleat for a conveyor belt of elastomeric material, in particular for a vertical conveyor, comprising a cleat base (2) which can be fixed to the carrying side of the conveyor belt and in which an anchoring element (5) is located, and comprising a cleat section (1) forming a transverse wall of the conveyor belt and removably fixed to the cleat base (2) with the aid of the anchoring element (5), characterised in that the anchoring element (5) is a rod which extends transversely to the running direction (6) of the conveyor belt in the cleat base (2), that the cleat base (2) bears against the cleat section (1) at one side by means of only one arm (8) and that an element (4, 9) of a screw connection (9, 10; 4, 12) traverses the cleat section (1) in cross section.

2. Cleat according to claim 1, characterised in that the cleat base (2) has an arm (8) against which the lower region of the cleat section (1) bears in a plane manner.

3. Cleat according to claim 1 or claim 2, characterised in that the cleat base (2) has a triangular cross-sectional shape.

4. Conveyor belt of elastomeric material, in particular vertical conveyor, comprising cleats according to one or more of claims 1 to 3.

## Revendications

1. Tasseau pour une courroie de transport en matériau élastomère, en particulier pour fin élévateur, avec un pied de tasseau (2) pouvant être fixé sur le côté portant de la courroie de transport, dans lequel se trouve un élément d'ancrage (5), et avec une portion de tasseau (1) formant une paroi transversale de la courroie de transport, qui est fixée de manière amovible sur le pied de tasseau (2) à l'aide de l'élément d'ancrage (5), caractérisé en ce que l'élément d'ancrage (5) est une tige qui s'étend dans le pied de tasseau (2), transversalement à la direction de circulation (6) de la courroie de transport, en ce que le pied de tasseau (2) s'applique par une branche (8) seulement, d'un côté, contre la portion de tasseau (1), et en ce qu'un élément (4, 9) d'un assemblage à vis (9, 10 ; 4, 12) traverse la portion de tasseau (1) en section transversale.

2. Tasseau selon la revendication 1, caractérisé en ce que le pied de tasseau (2) présente une branche (8) contre laquelle s'applique à plat la zone inférieure de la portion de tasseau (1).

3. Tasseau selon la revendication 1 ou 2, caractérisé en ce que le pied de tasseau (2) présente en section transversale une forme de section triangulaire.

4. Courroie de transport en matériau élastomère, en particulier élévateur, comportant des tasseaux selon une ou plusieurs des revendications 1 à 3.
